# EUROPEAN PATENT APPLICATION

(11) **EP 4 593 206 A1**
(43) Date of publication of application: **30.07.2025**
(21) Application number: 25151712.4
(22) Date of filing: 14.01.2025
(51) Int. Cl.: H01R 13/453, H01R 4/34, H01R 11/12, H01R 13/502

(54) **CONNECTOR**

(30) Priority: 23.01.2024 JP 2024007718
(71) Applicant: Yazaki Corporation, Tokyo 108-0075 (JP)
(72) Inventor: Oishi, Megumi, Makinohara-shi, Shizuoka, 421-0407 (JP); Nomura, Shoichi, Makinohara-shi, Shizuoka, 421-0407 (JP)
(74) Representative: Grünecker Patent- und Rechtsanwälte PartG mbB

(57) **Abstract**

A connector (100) includes a terminal (20) electrically connected to a terminal end portion (10a) of an electric wire (10), a housing (30) configured to house the terminal end portion of the electric wire, and to cause the terminal to protrude from an opening formed at one end thereof, an elastic member (40) provided in the housing, and a cover housing (50) disposed on the one end side of the housing in a state of being supported by the elastic member and configured to house the terminal, the cover housing having an opening portion (50b) formed at an end portion (50a) thereof, the end portion being located on an opposite side of the housing side, in which the cover housing is configured, when external force toward the housing is applied to the cover housing, to be housed in the housing from the opening of the housing while elastically deforming the elastic member, and to cause the terminal to protrude from the opening portion to the outside of the cover housing.

## Description

### BACKGROUND OF THE INVENTION

### 1. Field of the Invention

The present invention relates to a connector.

### 2. Description of the Related Art

For example, Japanese Utility Model Registration No. 3208179 discloses a technique related to a spring connector including a movable terminal and a spring member that constantly biases the movable terminal upwards. In the spring connector of Japanese Utility Model Registration No. 3208179, two movable terminals are provided, and these movable terminals are configured to be independently slidable in the vertical direction and are independently swingable in a plane parallel to the sliding direction. Circular arc shaped convex portions protruding from the upper end of a housing and having line contact portions capable of coming into contact with terminals electrically connected to the movable terminals are respectively formed at the upper ends of the movable terminals, and inclined surfaces each inclined relative to the pressing surface of a spring member are respectively formed at the lower ends of the movable terminals. In Japanese Utility Model Registration No. 3208179, it is said that contact resistance is stabilized by the above configuration, and stable conduction performance can be obtained.

Meanwhile, in a high-voltage connector used in an electric vehicle or the like, a contact preventing structure configured to prevent the finger of an operator from coming into contact with a terminal (conducting portion) may be adopted. In a connector in which the contact preventing structure is adopted, a terminal structure becomes complicated, which may increase manufacturing costs of the connector. In the connector, it is desired to appropriately suppress the finger from coming into contact with the terminal while suppressing complication of the terminal structure.

### SUMMARY OF THE INVENTION

An object of the present invention is to provide a connector capable of appropriately suppressing the finger from coming into contact with a terminal while suppressing complication of a terminal structure.

In order to achieve the above mentioned object, a connector according to one aspect of the present invention includes a terminal electrically connected to a terminal end portion of an electric wire; a housing configured to house the terminal end portion of the electric wire, and to cause the terminal to protrude from an opening formed at one end of the housing; an elastic member provided in the housing; and a cover housing disposed on the one end side of the housing in a state of being supported by the elastic member and configured to house the terminal therein, the cover housing having an opening portion at an end portion thereof, the end portion being located on an opposite side of the housing side, wherein the cover housing is configured, when external force toward the housing is applied to the cover housing, to be housed in the housing from the opening of the housing while elastically deforming the elastic member, and to cause the terminal to protrude from the opening portion to an outside of the cover housing.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a cross-sectional view illustrating a connector according to an embodiment;
FIG. 2 is a plan view illustrating the connector according to the embodiment; and
FIG. 3 is a cross-sectional view illustrating a connection state between the connector and a mating device unit according to the embodiment.

### DETAILED DESCRIPTION OF THE PREFERRED EMBODIMENTS

Hereinafter, a connector according to an embodiment of the present invention will be described in detail with reference to the drawings. It is noted that the present invention is not limited by the embodiment. In addition, configuration elements in the following embodiments include those that can be easily assumed by those skilled in the art or those that are substantially the same.

### Embodiment

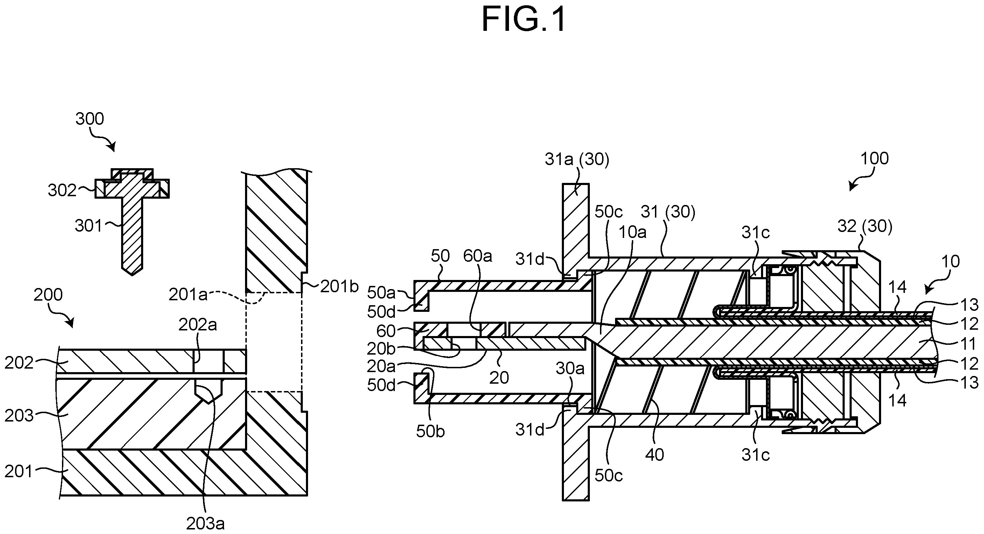

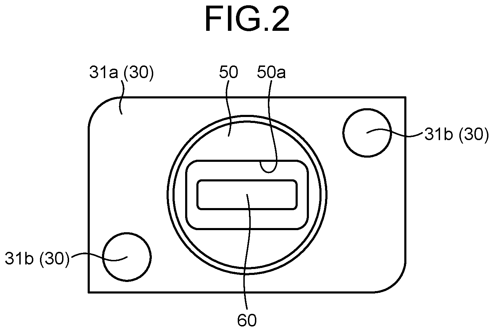

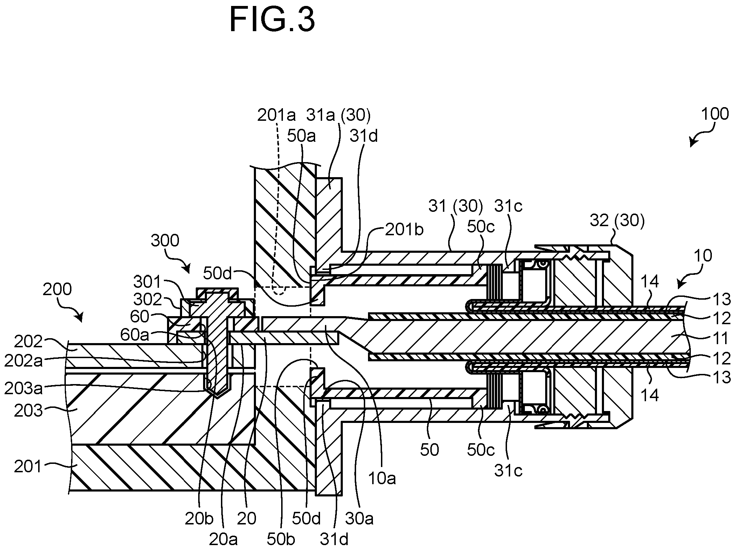

An embodiment will be described with reference to FIGS. 1 to 3. FIG. 1 is a cross-sectional view illustrating a connector according to an embodiment, FIG. 2 is a plan view illustrating the connector according to the embodiment, and FIG. 3 is a cross-sectional view illustrating a connection state between the connector according to the embodiment and a mating device unit. It is noted that FIG. 2 is a plan view illustrating the connector viewed from the mating device unit side in FIG. 1.

A connector 100 according to the embodiment illustrated in FIG. 1 is, for example, a shield connector, and is incorporated in a wire harness to be wired in a vehicle such as an automobile. Here, in the wire harness, for example, a plurality of electric wires 10 used for power supply and signal communication are bundled to form a collective component for connection between respective devices mounted on a vehicle, and the plurality of electric wires 10 are connected to the respective devices by the connector 100 or the like.

The connector 100 according to the embodiment includes a terminal 20, a housing 30, an elastic member 40, a cover housing 50, and a terminal cover 60. The terminal 20 is made of a conductive metal. In the embodiment, the terminal 20 is formed in a flat plate shape having a pair of main surfaces. One end portion of the terminal 20 is electrically connected to a terminal end portion 10a of the electric wire 10.

In the embodiment, the electric wire 10 is a so-called shielded electric wire, and includes a core wire 11, an inner sheath (inner sheath) 12, a shielding material 13, and an outer sheath (outer sheath) 14. The core wire 11 has conductivity and is formed in a cylindrical shape. For example, the core wire 11 may be made of one cylindrical metal linear conductor, or may be bundled as one cylindrical conductor by twisting a plurality of metal linear conductors. The inner sheath 12 is formed in a cylindrical shape and is an insulating member that covers the core wire 11. The shielding material 13 is a conductive member that is formed in a cylindrical shape and covers the inner sheath 12. The shielding material 13 may be a braided body obtained by braiding a metal linear conductor in a mesh shape and a cylindrical shape, or may be a metal foil material (so-called metal foil) formed in a cylindrical shape. The outer sheath 14 is formed in a cylindrical shape and is an insulating member that covers the shielding material 13. The electric wire 10 of the embodiment has a core wire exposed portion in which the inner sheath 12, the shielding material 13, and the outer sheath 14 are partially removed at the terminal end portion 10a, and the core wire 11 is exposed to the outside.

In the embodiment, one end portion of the terminal 20 is bonded to the core wire exposed portion in the terminal end portion 10a of the electric wire 10 by ultrasonic welding or the like. Here, one end portion of one surface (upper surface) of the pair of main surfaces of the terminal 20 is bonded to the core wire exposed portion. An insertion hole 20b penetrating the terminal 20 in the plate thickness direction is formed at the other end portion of the terminal 20. The insertion hole 20b is a hole configured to allow a shaft portion of a fastening bolt 301 described later to be inserted therethrough.

The housing 30 is configured to house the terminal end portion 10a of the electric wire 10. The housing 30 of the embodiment includes a cylindrical portion 31 and a rear holder 32. The cylindrical portion 31 is a conductive member formed in a cylindrical shape, and houses the terminal end portion 10a of the electric wire 10 in the inner space. At the terminal end portion 10a of the electric wire 10 housed in the inner space of the housing 30, the shielding material 13 and the outer sheath 14 are folded back so as to expose the inner sheath 12 covering the core wire 11 to the outside, and the terminal end portion of the folded shielding material 13 is electrically connected to the inner circumferential surface of the housing 30.

An opening 30a is formed at one end of the cylindrical portion 31 of the housing 30, and the terminal 20 protrudes from the opening 30a. A plate-shaped flange portion 31a extending toward the outside of the cylindrical portion 31 is formed at one end of the cylindrical portion 31.

As illustrated in FIG. 2, an insertion hole 31b penetrating the flange portion 31a is formed in the flange portion 31a. The connector 100 is mounted on a mating device unit 200 to be described later, and is fixed to the mating device unit 200 by a fastening member (for example, a fastening bolt). Specifically, the fastening member is inserted into the insertion hole 31b of the flange portion 31a of the connector 100, and is screwed with a screw hole formed in the mating device unit 200 so as to communicate with the insertion hole 31b, thereby fixing the connector 100 to the mating device unit 200.

In the embodiment, the flange portion 31a is formed in a rectangular shape having the opening 30a at a central portion thereof when viewed from the mating device unit 200 side (the side opposite to the proximal end side of the electric wire 10 with respect to the flange portion 31a). Two insertion holes 31b are formed in the flange portion 31a, one insertion hole 31b is formed in an upper right corner as viewed from the mating device unit 200 side, and the other insertion hole 31b is formed in a lower left corner as viewed from the mating device unit 200 side.

As illustrated in FIG. 1, the rear holder 32 closes an opening formed at the other end of the cylindrical portion 31. An insertion hole through which the electric wire 10 is inserted is formed in the rear holder 32, and the terminal end portion 10a of the electric wire 10 is housed in a housing space of the cylindrical portion 31 through the insertion hole of the rear holder 32.

The elastic member 40 is a member that is provided in the housing 30 and supports the cover housing 50 described later. The elastic member 40 of the embodiment is a coil spring made of metal. The elastic member 40 is disposed in the housing space of the cylindrical portion 31 in the housing 30 and extends in a direction along a mounting direction of the connector 100 and the mating device unit 200. In the embodiment, the elastic member 40 extends in the direction along the mounting direction of the connector 100 and the mating device unit 200 so as to be wound around the terminal end portion 10a of the electric wire 10 in the housing 30.

A first locking protrusion 31c protruding toward the inside of the cylindrical portion 31 is formed on the inner circumferential surface of the cylindrical portion 31. The first locking protrusion 31c of the embodiment is formed in a ring shape in the circumferential direction of the cylindrical portion on the inner circumferential surface of the cylindrical portion 31. The first locking protrusion 31c is located at an end portion of the cylindrical portion 31 on the rear holder 32 side. An end portion of the elastic member 40 on the rear holder 32 side is supported by the housing 30 by abutting on the first locking protrusion 31c, and the elastic member 40 is held so as to be elastically deformable in the housing space of the cylindrical portion 31 by being sandwiched between the cover housing 50 and the first locking protrusion 31c.

The cover housing 50 is a member that is disposed on one end side (one end on the mating device unit 200 side) of the housing 30 in a state of being supported by the elastic member 40 and houses the terminal 20. The cover housing 50 of the embodiment is an insulating cylindrical member, and is a member that suppresses the finger of an operator from coming into contact with the terminal 20 by housing the terminal 20 therein when the connector 100 is not mounted on the mating device unit 200.

A third locking protrusion 50c protruding outwards is formed at an end portion of the cover housing 50 on the rear holder 32 side. For example, the third locking protrusion 50c is formed in a ring shape in the circumferential direction of the cover housing 50 on the outer circumferential surface of the cover housing 50. A second locking protrusion 31d protruding toward the inside of the cylindrical portion 31 is formed at an end portion of the cylindrical portion 31 on the opening 30a side. The second locking protrusion 31d of the embodiment is formed in a ring shape along the inner circumferential surface of the cylindrical portion 31. The cover housing 50 is held by allowing the third locking protrusion 50c to be sandwiched between the second locking protrusion 31d and the elastic member 40.

The cover housing 50 has an opening portion 50b formed at an end portion 50a on the opposite side of the housing 30 side. In the embodiment, an annular portion 50d protruding toward the inside of the cover housing 50 is formed at the end portion 50a of the cover housing 50 so as to surround the opening portion 50b. For example, in the connector 100 according to the embodiment, the annular portion 50d can suppress the finger of an operator from entering the inside of the cover housing 50.

The cover housing 50 is housed in the housing 30 from the opening 30a of the housing 30 while elastically deforming the elastic member 40 when external force toward the housing 30 is applied to the cover housing 50, and causes the terminal 20 to protrude from the opening portion 50b to the outside of the cover housing 50. That is, the cover housing 50 moves, when external force toward the housing 30 is applied to the cover housing 50, from the terminal housing position at which the terminal 20 is housed in the cover housing to the terminal protruding position at which the terminal 20 protrudes to the outside of the cover housing 50 while elastically deforming the elastic member 40. In addition, when the external force that is directed toward the housing 30 and is applied to the cover housing 50 is released, the cover housing 50 is moved by restoring force of the elastic member 40 from the inside of the housing 30 (terminal protruding position) to a position at which the terminal 20 is housed in the cover housing (terminal housing position).

The terminal cover 60 is an insulating member that covers the terminal 20. The terminal cover 60 is housed in the cover housing 50 together with the terminal 20. The opening portion 50b of the embodiment is formed in a size that permits passage of the terminal 20 and the terminal cover 60 housed in the cover housing 50. As illustrated in FIG. 2, in the embodiment, the opening portion 50b is formed in a shape (here, a rectangular shape) corresponding to the terminal cover 60 that covers the flat terminal 20. When the cover housing 50 moves from the terminal housing position to the terminal protruding position, the terminal cover 60 protrudes from the opening portion 50b of the cover housing 50 to the outside of the cover housing 50 together with the terminal 20. In addition, the terminal cover 60 is housed in the cover housing 50 together with the terminal 20 when the cover housing 50 moves from the terminal protruding position to the terminal housing position.

The terminal cover 60 of the embodiment is formed so as to expose a mating terminal connecting surface 20a which is a connecting surface of the terminal 20 with a mating terminal 202 and cover the other surface of the terminal. That is, the terminal 20 of the embodiment is provided in a state in which the mating terminal connecting surface 20a is exposed from the terminal cover 60. An insertion hole 60a communicating with the insertion hole 20b of the terminal 20 is formed in the terminal cover 60. In the embodiment, the mating terminal connecting surface 20a of the terminal 20 is a lower surface (surface of side opposite to the bonding surface with the core wire exposed portion) of the pair of main surfaces of the terminal 20.

The mating device unit 200 is a device unit on which the connector 100 is mounted, and includes a housing 201, the mating terminal 202, and a pedestal portion 203. The housing 201 is a metal housing 201 that houses the mating terminal 202 and the pedestal portion 203 therein. A terminal insertion port 201a is formed on a mounting surface, which is a surface of the housing 201 on which the connector 100 is mounted. The terminal insertion port 201a is formed in a size that permits the passage of the terminal 20 and restricts the passage of the cover housing 50. An edge portion 201b of the terminal insertion port 201a has a recessed shape recessed relative to a surface around the mounting surface.

The recessed shape of the edge portion 201b of the terminal insertion port 201a functions as a guide portion when the opening portion 50b of the cover housing 50 and the terminal insertion port 201a overlap each other and communicate with each other. The recessed shape at the edge portion 201b of the terminal insertion port 201a also functions as a mark at a position where the end portion 50a of the cover housing 50 is pressed. In the housing 201, a screw hole is formed at a position corresponding to the insertion hole 31b of the flange portion 31a in the connector 100. The housing 201 is configured such that the flange portion 31a can be fastened to the housing 201 by screwing a fastening member (fastening bolt or the like) into the screw hole.

The mating terminal 202 is formed of a conductive metal. In the embodiment, the mating terminal 202 is formed in a flat plate shape having a pair of main surfaces. For example, the end portion of the mating terminal 202 is electrically connected to an electronic component or the like provided in the housing 201 of the mating device unit 200 via a conductive member such as an electric wire. The mating terminal 202 is formed with an insertion hole 202a that penetrates the mating terminal 202 in the plate thickness direction.

The pedestal portion 203 is an insulating member on which the mating terminal 202 is placed. A screw hole 203a is formed in the pedestal portion 203 so as to communicate with the insertion hole 202a of the mating terminal 202 placed on the upper surface of the pedestal portion. The screw hole 203a is formed so as to be screwed with a fastening member 300 to be described later.

The terminal 20 and the mating terminal 202 are fixed in contact with each other by the fastening member 300. The fastening member 300 of the embodiment includes the fastening bolt 301 including a shaft portion and a head portion, and a cover portion 302 covering the head portion of the fastening bolt 301. The fastening bolt 301 is formed of a conductive metal material or the like, and the cover portion 302 is formed of an insulating resin material or the like. The shaft portion of the fastening bolt 301 is a rod-like portion extending in one direction, and the head portion of the fastening bolt 301 extends in a direction intersecting the extending direction of the shaft portion. The shaft portion of the fastening bolt 301 can be inserted into the insertion holes 20b, 60a, and 202a, and can be screwed into the screw hole 203a of the pedestal portion 203.

As illustrated in FIG. 3, the connector 100 is mounted on the mating device unit 200 such that the terminal insertion port 201a of the mating device unit 200 and the opening portion 50b of the cover housing 50 overlap each other, and the end portion 50a of the cover housing 50 is pressed against the edge portion 201b of the terminal insertion port 201a.

For example, an operator who mounts the connector 100 on the mating device unit 200 holds the housing 30 in his/her hand and presses the end portion 50a of the cover housing 50 against the edge portion 201b of the terminal insertion port 201a of the mating device unit 200, thereby applying force toward the housing 30 to the end portion 50a of the cover housing 50.

When the housing 30 is moved so as to press the cover housing 50 against the edge portion 201b of the terminal insertion port 201a of the mating device unit 200 such that external force toward the housing 30 is applied to the cover housing, the cover housing 50 moves to the terminal protruding position and causes the terminal 20 to protrude from the opening portion 50b into the terminal insertion port 201a.

The operator moves the housing 30 toward the mating device unit 200 until the flange portion 31a comes into contact with the housing 201 of the mating device unit 200. Then, the operator fixes the connector 100 to the mating device unit 200 by inserting the fastening member into the insertion hole 31b of the flange portion 31a and screwing the fastening member into the screw hole of the housing 201 of the mating device unit 200. By fixing the connector 100 to the mating device unit 200 with the fastening bolt, for example, the cover housing 50 can be restricted from being pushed back toward the mating device unit 200 by restoring force of the elastic member 40.

The mating terminal 202 of the mating device unit 200 is disposed at a position in contact with the terminal 20 protruding into the terminal insertion port 201a. In the embodiment, the mating terminal 202 is disposed at a position where the upper surface of the mating terminal 202 is in contact with the surface of the mating terminal connecting surface (lower surface) 20a of the terminal 20 protruding into the terminal insertion port 201a. At this time, the insertion hole 20b of the terminal 20 protruding into the terminal insertion port 201a and the insertion hole 202a of the mating terminal 202 are located at positions communicating with each other. That is, in the embodiment, when the connector 100 is mounted on the mating device unit 200, the terminal 20 and the mating terminal 202 overlap each other in a state in which the insertion hole 20b and the insertion hole 202a communicate with each other.

The operator fixes the terminal 20 and the mating terminal 202 to the pedestal portion 203 by inserting the shaft portion of the fastening bolt 301 into the insertion holes 20b, 60a, and 202a and screwing the shaft portion with the screw hole 203a of the pedestal portion 203. At this time, the terminal 20 is covered with the insulating terminal cover 60, and the head portion of the fastening bolt 301 is covered with the insulating cover portion 302. With this configuration, when the terminal 20 and the mating terminal 202 are fixed to the pedestal portion 203 by the fastening member 300, the connector 100 according to the embodiment can suppress the finger of the operator from coming into contact with the conductive portion (the terminal 20, the mating terminal 202, the fastening bolt 301, and the like).

When the connector 100 is removed from the mating device unit 200, the operator first removes the fastening bolt inserted into the insertion hole 31b (refer to FIG. 2) of the flange portion 31a and the fastening member 300 inserted into the insertion hole 20b of the terminal 20. Then, the operator holds the housing 30 in the hand and moves the housing 30 in a direction away from the edge portion 201b of the terminal insertion port 201a so as to remove the terminal 20 from the terminal insertion port 201a of the mating device unit 200.

When external force toward the housing 30 is released by causing the housing 30 to be moved in the direction away from the edge portion 201b of the terminal insertion port 201a, the cover housing 50 moves to the terminal housing position by the restoring force of the elastic member 40 and houses the terminal 20 removed from the terminal insertion port 201a. With this configuration, even when the connector 100 of the embodiment is removed from the mating device unit 200, it is possible to prevent the operator from bringing the finger into contact with the conductive portion (the terminal 20, the fastening bolt 301, and the like).

As described above, the connector 100 according to the embodiment includes the terminal 20 electrically connected to the terminal end portion 10a of the electric wire 10, the housing 30 that houses the terminal end portion 10a of the electric wire 10 and causes the terminal 20 to protrude from the opening 30a formed at one end thereof, the elastic member 40 provided in the housing 30, and the cover housing 50 that is disposed on the one end side of the housing 30 in a state of being supported by the elastic member 40, houses the terminal 20, and has the opening portion 50b formed at the end portion 50a on the opposite side of the housing 30 side. The cover housing 50 is configured, when external force toward the housing 30 is applied to the cover housing 50, to be housed in the housing 30 from the opening 30a of the housing 30 while elastically deforming the elastic member 40, and to cause the terminal 20 to protrude from the opening portion 50b to the outside of the cover housing 50.

In the connector 100 according to the embodiment, when the external force toward the housing 30 is applied to the cover housing 50, the cover housing 50 is housed in the housing 30 from the opening 30a of the housing 30 while elastically deforming the elastic member 40 and causes the terminal 20 to protrude from the opening portion 50b to the outside of the cover housing 50. In the connector 100 according to the embodiment, for example, the housing 30 is mounted on the mating device unit 200 by pressing the end portion of the cover housing 50 against the edge portion 201b of the terminal insertion port 201a of the mating device unit 200, thereby enabling the terminal 20 to be inserted into the mating device unit 200 while the finger of the operator is prevented from coming into contact with the terminal 20. With this configuration, the connector 100 according to the embodiment can appropriately suppress the finger of the operator from coming into contact with the terminal 20 while suppressing complication of the structure of the terminal 20.

In addition, in the connector 100 according to the embodiment, when the external force that is directed toward the housing 30 and is applied to the cover housing 50 is released, the cover housing 50 is moved by restoring force of the elastic member 40 from the inside of the housing 30 to a position allowing the cover housing to house the terminal 20 therein.

In the connector 100 according to the embodiment, by removing the connector 100 from the mating device unit 200, the external force that is directed toward the housing 30 and is applied to the end portion of the cover housing 50 is released, and the cover housing 50 is moved by the restoring force of the elastic member 40 so as to house the terminal 20 therein. With this configuration, even when the connector 100 is removed from the mating device unit 200, it is possible to appropriately suppress the finger of the operator from coming into contact with the terminal 20.

Further, in the connector 100 according to the embodiment, when the housing 30 is moved to press the cover housing 50 against the edge portion 201b of the terminal insertion port 201a of the mating device unit 200 such that external force toward the housing 30 is applied to the cover housing, the cover housing 50 moves to the terminal protruding position and causes the terminal 20 to protrude from the opening portion 50b into the terminal insertion port 201a, whereas, when the housing 30 is moved in a direction away from the edge portion 201b of the terminal insertion port 201a such that the external force toward the housing 30 is released, the cover housing 50 moves to the terminal housing position by the restoring force of the elastic member 40 and houses the terminal 20 removed from the terminal insertion port 201a.

The connector 100 according to the embodiment is mounted on the mating device unit 200 such that the cover housing 50 is pressed against the edge portion 201b of the terminal insertion port 201a, whereby the terminal 20 can be inserted into the terminal insertion port 201a of the mating device unit 200 while suppressing the finger of the operator from coming into contact with the vicinity of the terminal 20. In addition, when the connector 100 is removed from the mating device unit 200, the cover housing 50 moves to the position at which the terminal 20 is housed in the cover housing by the restoring force of the elastic member 40, thereby making it possible to appropriately suppress the finger of the operator from coming into contact with the terminal 20 even when the connector 100 is removed from the mating device unit 200.

The connector 100 according to the embodiment further includes the terminal cover 60 configured to cover the terminal 20, housed in the cover housing 50 together with the terminal 20, and formed to protrude from the opening portion 50b to the outside of the cover housing 50 together with the terminal 20 when external force toward the housing 30 is applied to the cover housing 50. The terminal 20 is formed in a flat plate shape having a pair of main surfaces, and the mating terminal connecting surface 20a which is one of the pair of main surfaces is exposed from the terminal cover 60.

In the connector 100 according to the embodiment, since the terminal cover 60 covers the terminal 20, for example, even in a state in which the terminal 20 protrudes from the opening portion 50b to the outside of the cover housing 50, it is possible to suppress the finger of the operator from coming into contact with the terminal 20.

As a configuration of a comparative example different from the embodiment, a structure in which screw holes are respectively provided in a terminal of a connector and a mating terminal such that the connector and the mating terminal are fastened by a fastening bolt is also considered. When a contact preventing structure for preventing contact of the finger of an operator is applied to such a terminal structure, it is conceivable to form a cylindrical conductive portion extending in the fastening direction of both terminals by a length of a shaft portion of the fastening bolt and to individually cover each terminal with an insulating member. In this case, since the terminal structure becomes complicated, manufacturing costs of the connector may increase.

On the other hand, in the connector 100 of the embodiment, the cover housing 50 and the terminal cover 60 can prevent the finger of the operator from coming into contact with the terminal 20 having the flat plate shape, thereby making it possible to appropriately suppress the finger of the operator from coming into contact with the terminal 20 while suppressing complication of the shape of the terminal 20. By suppressing complication of the shape of the terminal 20, for example, an increase in manufacturing costs of the connector 100 can be suppressed.

### Modification

It is noted that, in the above-described embodiment, although a description has been given as to a configuration in which the external force toward the housing 30 is applied to the cover housing 50 by pressing the end portion 50a of the cover housing 50 against the edge portion 201b of the terminal insertion port 201a of the mating device unit 200 as an example, the present invention is not limited to this configuration. For example, the cover housing 50 may have a protrusion protruding from the outer circumferential surface of the cover housing 50 toward the outside of the cover housing 50.

In this case, the protrusion is formed, for example, near the end portion 50a of the cover housing 50. For example, a plurality of the protruding portions may be provided on the outer circumferential surface of the cover housing 50, or may be formed in a ring shape in the circumferential direction of the cover housing 50. The terminal insertion port 201a of the mating device unit 200 is set to a size that permits the passage of the terminal 20 and restricts the passage of the cover housing 50 by the protrusion.

Further, the recessed shape of the edge portion 201b of the terminal insertion port 201a in the mating device unit 200 may be formed at a depth capable of housing the protrusion when the connector 100 is mounted on the mating device unit 200. In addition, a recessed shape for housing the protrusion may be formed on the flange portion 31a side. With this configuration, for example, it is possible to suppress generation of a gap between the flange portion 31a and the housing 201 and deterioration in dustproof performance and the like.

The contents disclosed in the above-described embodiments and modifications can be appropriately combined and executed.

A connector according to the present embodiment has an effect of appropriately suppressing the finger from coming into contact with a terminal while suppressing complication of a terminal structure.

## Claims

1. A connector (100) comprising:
a terminal (20) electrically connected to a terminal end portion (10a) of an electric wire (10);
a housing (30) configured to house the terminal end portion (10a) of the electric wire (10), and to cause the terminal (20) to protrude from an opening (30a) formed at one end of the housing (30);
an elastic member (40) provided in the housing (30); and
a cover housing (50) disposed on the one end side of the housing (20) in a state of being supported by the elastic member (40) and configured to house the terminal (20) therein, the cover housing (50) having an opening portion (50b) at an end portion (50a) thereof, the end portion (50a) being located on an opposite side of the housing (30) side, wherein
the cover housing (50) is configured, when external force toward the housing (30) is applied to the cover housing (50), to be housed in the housing (30) from the opening (30a) of the housing (30) while elastically deforming the elastic member (40), and to cause the terminal (20) to protrude from the opening portion (50b) to an outside of the cover housing (50).

2. The connector (100) according to claim 1, wherein
the cover housing (50) is configured, when the external force directed toward the housing (30) and applied to the cover housing (50) is released, to be moved by restoring force of the elastic member (40) from an inside of the housing (30) to a position allowing the cover housing (50) to house the terminal (20) therein.

3. The connector (100) according to claim 1, wherein
the cover housing (50) is configured, when the housing (30) is moved to press the cover housing (50) against an edge portion (201b) of a terminal insertion port (201a) of a mating device unit (200) such that the external force toward the housing (30) is applied to the cover housing (50), to move to a terminal protruding position so as to cause the terminal (20) to protrude from the opening portion (50b) into the terminal insertion port (201a), and
the cover housing (50) is configured, when the housing (30) is moved in a direction away from the edge portion (201b) of the terminal insertion port (201a) such that the external force toward the housing (30) is released, to move to a terminal housing position by restoring force of the elastic member (40) so as to house the terminal (20) removed from the terminal insertion port (201a) therein.

4. The connector (100) according to any one of claims 1 to 3, further comprising:
a terminal cover (60) configured to cover the terminal (20) and housed in the cover housing (50) together with the terminal (20), the terminal cover (60) being configured, when the external force toward the housing (30) is applied to the cover housing (50), to protrude from the opening portion (50b) to the outside of the cover housing (50) together with the terminal (20), wherein
the terminal (20) is formed in a flat plate shape having a pair of main surfaces, and one of the pair of main surfaces is a mating terminal connecting surface (20a) exposed from the terminal cover (60).
